Europäisches Patentamt

European Patent Office

Office européen des brevets

(19)

(11) **EP 1 272 870 B1**

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(51) Int Cl.$^7$: **G01S 15/89**, G01S 7/52

(21) Anmeldenummer: **00993339.1**

(86) Internationale Anmeldenummer:
**PCT/DE2000/004389**

(22) Anmeldetag: **08.12.2000**

(87) Internationale Veröffentlichungsnummer:
**WO 2001/042812 (14.06.2001 Gazette 2001/24)**

(54) **VERFARHEN ZUM BESTIMMEN VON TIEFENWERTEN EINES GEWÄSSERS**

METHOD FOR DETERMINING THE DEPTH VALUES OF A BODY OF WATER

PROCEDE DE DETERMINATION DE VALEURS DE PROFONDEUR D'UN PLAN D'EAU

(84) Benannte Vertragsstaaten:
**AT BE CH CY DE DK ES FI FR GB GR IE IT LI LU MC NL PT SE TR**

(30) Priorität: **08.12.1999 DE 19959014**

(43) Veröffentlichungstag der Anmeldung:
**08.01.2003 Patentblatt 2003/02**

(73) Patentinhaber: **Atlas Hydrographic GmbH**
**28211 Bremen (DE)**

(72) Erfinder:
• **BRAUN, Michael**
**28816 Stuhr (DE)**

• **FREKING, Benno**
**28844 Bremen (DE)**

(74) Vertreter: **Schulz, Klaus, Dipl.-Ing.**
**In der Bredenau 69**
**Fischerhude**
**28870 Ottersberg (DE)**

(56) Entgegenhaltungen:
**EP-A- 0 629 879**  **US-A- 4 611 313**
**US-A- 5 077 699**

EP 1 272 870 B1

**Beschreibung**

Die Erfindung betrifft ein Verfahren zum Bestimmen von Tiefenwerten eines Gewässers mit einem Fächerlot der im Anspruch 1 angegebenen Art.

Auf Forschungs- und Vermessungsschiffen werden Fächerlote eingesetzt, die der Kartierung und Exploration von Gewässern dienen. Dabei wird von einem Fächerlot, dessen hydroakustische Wandler unterhalb des Fahrzeuges angeordnet sind, ein bis zu 150° großer Winkelsektor erfaßt und gleichzeitig vermessen. In diesem Winkelsektor werden Ultraschallimpulse abgestrahlt und in den eng gebündelten Empfangsrichtungen mit einer fächerförmigen Richtcharakteristik in einer Vielzahl einzelner schmaler Sektoren wieder empfangen. Da die überwiegende Anzahl der Empfangsrichtungen nicht senkrecht sondern schräg nach unten ausgerichtet ist, werden Lotimpulse empfangen, die von einem Auftreffpunkt gestreut bzw. reflektiert worden sind, sich aber nicht linear sondern aufgrund von Schallbeugung auf einem gekrümmten Weg ausgebreitet haben. Die Ursache des gekrümmten Schallstrahlverlaufs liegt in der durch unterschiedliche Schallgeschwindigkeitsschichtungen hervorgerufenen Schallbeugung begründet. Von der unmittelbar am Wandler meßbaren Richtung des Schalleinfallswinkels kann daher nicht linear auf den Auftreffpunkt des Schallstrahls geschlossen werden, der aufgrund der Krümmung erheblich vom Auftreffpunkt des Schalleinfallswinkels abweicht. Durch zusätzliche Ermittlung der Schallgeschwindigkeit in den verschiedenen Schichtungen eines Gewässers, beispielsweise miteiner vom Fahrzeug herabgelassenen Schallmeßsonde, können die Schallgeschwindigkeiten in den verschiedenen Schichtungen gemessen und eine solche mittlere Schallgeschwindigkeit bestimmt werden, wie sie sich für eine lineare Ausbreitung des Lotimpulses vom Auftreffpunkt am Gewässerboden zum Wandler ergeben würde. Ein derartiges Meßverfahren für die mittlere Schallgeschwindigkeit ist für aufeinanderfolgende Messungen von Bodenprofilen eines Gewässers sehr aufwendig, weil das Fahrzeug für den Einsatz der Schallgeschwindigkeitsmeßsonde seine Fahrt ggf. bis zum Stillstand verzögern muß.

Ein Verfahren, mit dem jegliche Form der Fahrtunterbrechung durch zusätzliche Sensormessungen vermieden kann, wird in der EP 629 879 vorgestellt. Aus einer Ausgleichsfunktion, die eine Modellfunktion des Gewässerbodenprofils darstellt und die Tiefenwerte mit minimalem Fehler annähert, wird mit den Mitteln der linearen Regression ein Korrekturwert für die mittlere Schallgeschwindigkeit ermittelt. Mit der so korrigierten Schallgeschwindigkeit sind dann aus den gemessenen Laufzeiten Tiefenwerte mit größerer Genauigkeit bestimmbar. Dieses Verfahren läßt jedoch bestimmte Parameter der Fahrzeugbewegung, die die Genauigkeit der Meßdaten beeinflussen, unbeachtet. Dies vermindert die mit diesem Verfahren erzielbare Genauigkeit der Tiefenwertbestimmung.

Der Erfindung liegt die Aufgabe zugrunde, die Bestimmung von Tiefenwerten mit Fächerlot zu verbessern und die Genauigkeit der Gewässer-Bodenprofil-Vermessung zu erhöhen.

Die Aufgabe wird mit einem Verfahren zum Bestimmen von Tiefenwerten eines Gewässers mit einem Fächerlot der im Oberbegriff des Anspruchs 1 angegebenen Art durch die Merkmale im Kennzeichenteil des Anspruchs 1 gelöst.

Bei dem erfindungsgemäßen Verfahren werden je Lotfächer für eine Folge von Fächerstrahlen die Schallaufzeiten gemessen und daraus die Tiefen- und Ablagewerte berechnet. Wesentlich für die korrekte Bestimmung von Tiefen- und Ablagewert ist dabei eine richtig ermittelte mittlere Schallgeschwindigkeit. Jedoch auch die Parameter der Fahrzeugbewegung, z. B. Roll-, Stampfund Gierwinkel, Toleranzen der Navigationsdaten, wie Position, Kurs und Geschwindigkeit, beeinflussen die Genauigkeit der Meßdaten. I dem Meßgebiet, d. h. dem überfahrenen, zu vermessenden Seegebiet, wird nun von dem Fächerlot eine Vielzahl von Meßwerten erfaßt und bei geeigneter Wahl der Tracks, das sind die durch die Kurse des Vermessungsfahrzeugs festgelegten Wegverläufe, auf denen dieses Meßgebiet überfahren wird, ergeben sich mehrfache Überschneidungen der

Lotspuren. Da aber an den Schnittpunkten der Lotspuren die Tiefenwerte notwendigerweise identisch sein müssen, können die Abweichungen verwendet werden, um fehlerhafte Parameter zu korrigieren.

Dazu wird für jeden Schnittpunkt der Einfluß einer geringfügigen Parameteränderung auf die Tiefendifferenzen berechnet und zwar selektiv für jeden Parameter. Da alle Anteile dieser selektiven Änderungen der Tiefendifferenzen die Gesamttiefendifferenz an dem betreffenden Schnittpunkt ergeben, werden mit den Mitteln der mehrfachen linearen Regression die Koeffizienten und damit diejenigen Funktionsanteile eines Ausgleichspolynoms derart berechnet, daß die Tiefendifferenzen über alle in die Regression einbezogenen Schnittpunkte des Überlappungsbereichs optimal, d.h. mit minimalen Fehler, angenähert werden.

Ein derartiges Meßverfahren nutzt die Vielfalt der vorhandenen Meßwerte zum Verbessern der Tiefenmessungen (Meßergebnisse). Es vermeidet zusätzliche Sensormessung und Ermittlung von Fehlertoleranzen. Ferner erfordert es keine unmittelbare Auswertung während der Meßfahrt, sondern ermöglicht, daß die Meßdaten erst nach Beendung der Meßfahrt nachträglich im Labor ausgewertet werden.

Weitere Vorteile des erfindungsgemäßen Verfahrens ergeben sich aus den Unteransprüchen.

Die Erfindung wird nunmehr anhand eines in der Zeichnung dargestellten Ausführungsbeispiels näher erläutert. Es zeigen:

Fig. 1     ein Blockschaltbild einer Fächerlotanlage,

Fig. 2     eine Darstellung der Meßgeometrie,

Fig. 3     eine Skizze zur Überlappung von Lotspuren zweier Tracks,

Fig. 4     eine Skizze mäanderförmiger Tracks,

Fig. 5     ein Flußdiagramm.

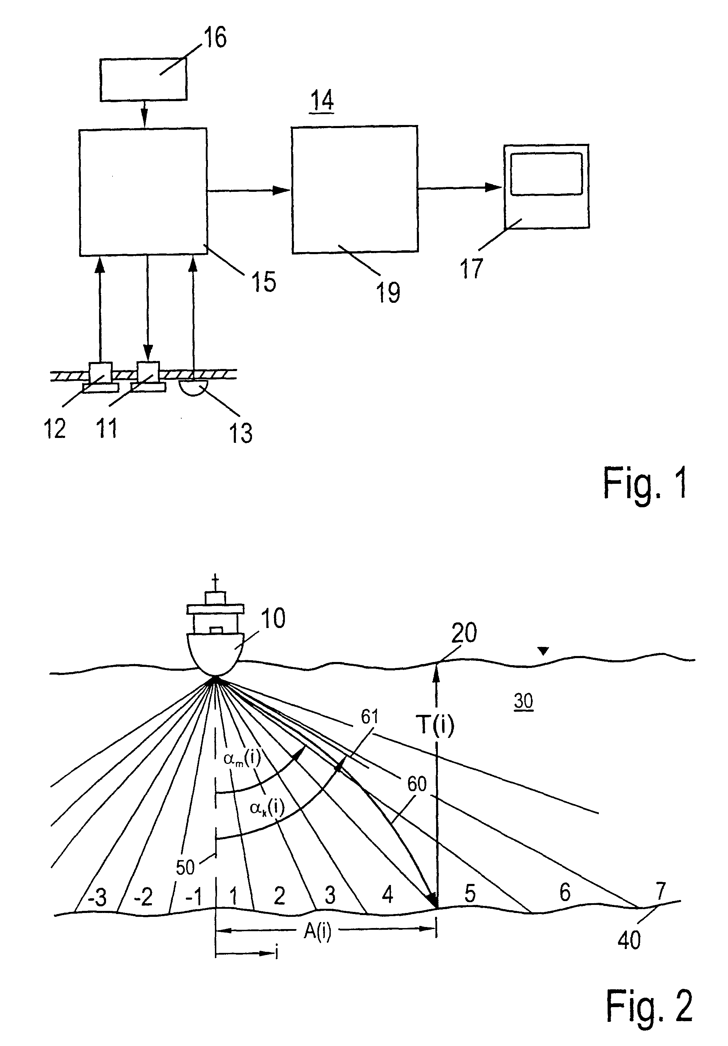

Das prinzipielle Blockschaltbild in Fig. 1 zeigt eine Fächerlotanlage 14 in einem Vermessungsfahrzeug. Dabei ist ein Sendewandler 11, ein Empfangswandler 12 und ein Schallgeschwindigkeitssensor 13 zur Messung der Schallgeschwindigkeit $c_k$ am Kiel des Fahrzeugs mit einem Fächerlot 15 verbunden. Das Fächerlot 15 benötigt ferner sämtliche Navigations- und Fahrzeugdaten, um eine Kartierung der Meßergebnisse zu ermöglichen. Diese Daten werden über die Navigationsschnittstelle 16 zugeführt. Mit dem Fächerlot 15 ist außerdem eine Datenausgabe in Form einer Anzeige 17 verbunden, die von einem Regressionsrechner 19 angesteuert wird, in dem die Korrekturen zur Bodenprofilermittlung bestimmt werden.

Der Sendewandler 11 weist quer zur Fahrtrichtung des Fahrzeugs eine sehr weite Richtcharakteristik auf, die ungerichtet ist, um den ganzen Sektor zu beschallen, der von dem Empfangsfächer des Empfangswandlers 12 überdeckt wird. In Fahrzeuglängsrichtung ist der Sendewandler 11 stark gebündelt, um die Schallabstrahlung allein auf den Nutzbereich zu konzentrieren.

Als Empfangsfächer des Empfangswandlers 12 sind dabei alle Empfangsrichtungen, d.h. etwa 2°-schmale Empfangssektoren vorgegeben, die, wie in Fig. 2 prinzipiell dargestellt, den Bereich von der linken zur rechten Fahrzeugseite hin von jeweils 75° überdecken. Durch entsprechende Richtungsbildner ist die Selektion der schmalen Empfangssektoren i gewährleistet. Wie ebenfalls der Fig. 2 zu entnehmen ist, sind den Empfangssektoren i Auftreffpunkte am Gewässerboden mit unterschiedlichen Entfernungen zugeordnet. Daher ergeben sich für die gestreuten Lotimpulse je nach Empfangswinkel unterschiedliche Laufzeiten t(i), die vom Fächerlot 15 gemessen werden. Die Gesamtheit der Auftreffpunkte oder Bodenpunkte bilden die Lotspur des Fächerlots.

Der Sensor 13 am Fahrzeugboden mißt die Schallgeschwindigkeit $c_k$ in unmittelbarer Nähe des Empfangswandlers 12, um den am Wandler 12 eingestellten Empfangswinkel $\alpha_k(i)$ zu bestimmen. Unter Berücksichtigung der geometrischen Beziehungen und der mittleren Schallgeschwindigkeit $c_m$ sind dann die Tiefenwerte T(i) am jeweiligen Auftreffpunkt durch das Fächerlot 15 ermittelbar und können als gemessenes Bodenprofil ebenfalls auf der Anzeige 17 dargestellt werden. Darüberhinaus ist das Fächerlot 15 derart ausgebildet, daß es die Überlappungsbereiche der Lotspuren und die Schnittpunkte bestimmt sowie die Tiefendifferenzen zwischen den Tiefenwerten der Tracks an diesen Schnittpunkten. Weiterhin werden die Änderungen der Tiefendifferenzen berechnet, wenn die Parameter verfahrensbedingt variiert werden.

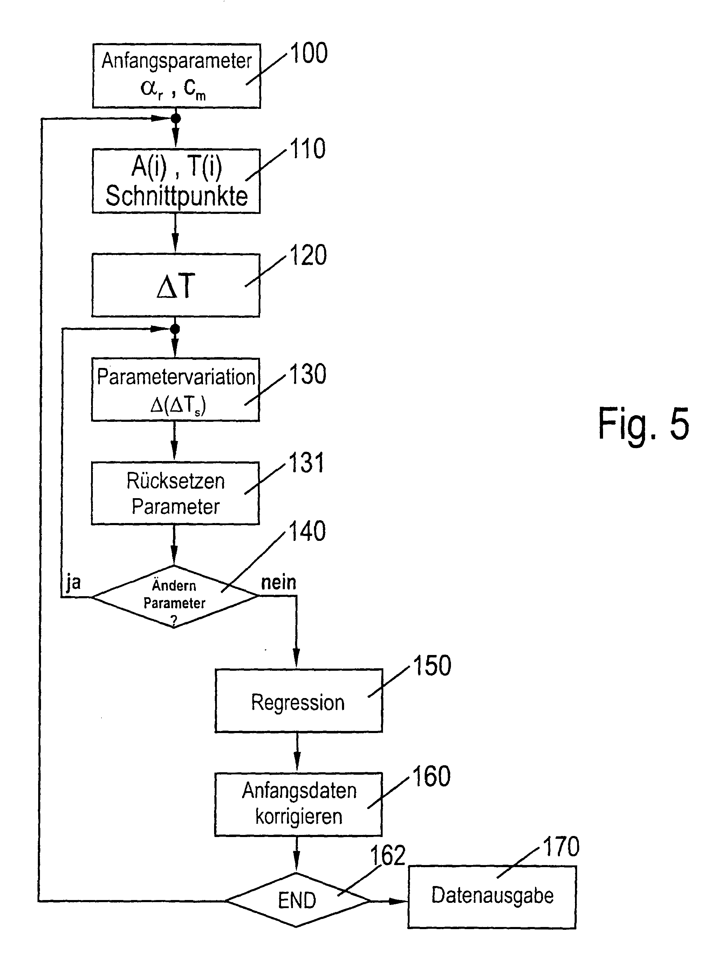

Diese Änderungen der Tiefendifferenzen werden auf den Regressionsrechner 19 übertragen, der die Koeffizienten eines Ausgleichspolynoms der Tiefendifferenzen für jeden Schnittpunkt bestimmt, das aus den mit den Koeffizienten multiplizierten Änderungen der Tiefendifferenzen gebildet wird, wie in Verbindung mit Fig. 5 gezeigt wird. Der Regressionsrechner 19 ist zur weiteren Verarbeitung der Ergebnisse mit der Datenausgabe 17 verbunden.

Zur Beschreibung der Meßgeometrie bezogen auf die Fahrzeugposition ist in Fig. 2 ein Vermessungsfahrzeug 10 auf der Wasseroberfläche 20 eines Gewässers 30 dargestellt. Die Tiefen oder Tiefenwerte T(i) des Gewässers 30 an den jeweiligen Meßpunkten sind durch das Bodenprofil 40 bestimmt. Das Vermessungsfahrzeug 10 ist mit einem Fächerlot ausgerüstet, dessen Fächer prinzipiell durch die teilweise dargestellten Sektoren gekennzeichnet ist. Die einzelnen Sektoren sind durch Zahlwerte für den Index i bezeichnet. Dabei sind von der senkrechten Lotlinie 50 nach rechts die Sektoren 1 bis 7 und links die Sektoren -1 bis -3 des Fächerlotes abgetragen. Die Sektoren i werden nachfolgend auch als Empfangsrichtungen i bezeichnet.

Vom Vermessungsfahrzeug 10 wird ein Sendeimpuls abgestrahlt, der u.a. im Bereich des Empfangssektors 5 am Gewässerboden gestreut bzw. reflektiert wird und auf dem Schallstrahl 60 den Empfangswandler des Vermessungsfahrzeugs 10 erreicht. Dabei weist die Tangente 61 an den Schallstrahl 60 den am Kiel gemessenen Winkel $\alpha_k(i)$ bezogen auf die Lotrichtung 50 auf. Der meß- oder einstellbare Winkel $\alpha_k(i)$ wird zum mittleren Empfangswinkel $\alpha_m(i)$ im Verhältnis der Schallgeschwindigkeiten am Kiel $c_k$ und der mittleren Schallgeschwindigkeit $c_m$ im Gewässer korrigiert und so der korrigierten Empfangsrichtung i, hier i=5, zugeordnet. Der Zusammenhang der Formelgrößen ist durch die Gl. 1

$$\frac{c_k}{c_m} = \frac{\sin \alpha_k(i)}{\sin \alpha_m(i)} \qquad (1)$$

beschrieben.

Mit der Annahme für eine mittlere Schallgeschwindigkeit $c_m$, z.B. $c_m$ = 1500 m/sec, und mit einem Meßwert für $c_k$ kann dann der mittlere Empfangswinkel $\alpha_m(i)$ für jeden Sektor des Fächerlots und somit für jede Empfangsrichtung i zu

$$\alpha_m = \arcsin \frac{c_m \cdot \sin\alpha_k}{c_k} \tag{2}$$

bestimmt werden.

Unter Berücksichtigung der für jede Empfangsrichtung i gemessenen Laufzeit t(i) des Lotimpulses ergeben sich dann entsprechend zugeordnet die Tiefe T(i) und die Ablage A(i) zu

$$T(i) = c_m \frac{t(i)}{2} \cos \alpha_m(i), \tag{3}$$

$$A(i) = c_m \frac{t(i)}{2} \sin \alpha_m(i). \tag{4}$$

Damit sind Tiefe T(i) und Ablage A(i) über Gleichung (2) neben der Laufzeit t(i) unmittelbar von den gemessenen Parametern, und zwar der mittleren Schallgeschwindigkeit $c_m$ einerseits und dem am Kiel gemessenen Winkel $\alpha_k(i)$ andererseits abhängig. Diese Parameter sind i.a. fehlerbehaftet. So ist die mittlere Schallgeschwindigkeit $c_m$ von Temperatur, Salzgehalt und Schichtung des Wassers abhängig und weicht über der Tiefe in erheblichen Maße von den am Kiel meßbaren Werten ab. Der am Kiel gemessene Winkel $\alpha_k(i)$ der empfangenen Schallimpulse wird insbesondere durch die Schiffsbewegung und dabei wesentlich durch das Rollen des Schiffes beeinflußt, d.h. eine Kippbewegung um die Schiffslängsachse. Die dabei auftretenden Abweichungen von der mittleren Schallgeschwindigkeit $c_m$ und einem korrekten Winkel $\alpha_k(i)$ sind meßtechnisch nicht oder allenfalls mit sehr großem Aufwand zu erfassen. Das erfindungsgemäße Verfahren dient daher der Verbesserung dieser und weiterer Parameter, wie nachstehend noch gezeigt wird.

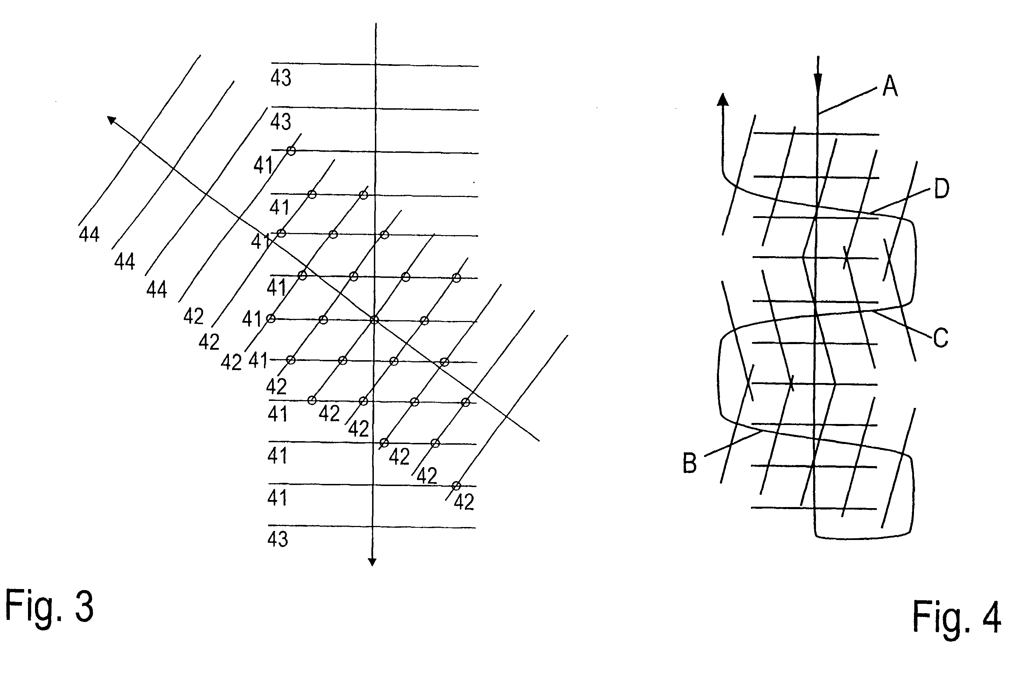

Fig. 3 zeigt die Lotspuren 41 und 42 der beiden Tracks A und B. Die Länge der Lotspuren 41 und 42 ist durch die maximal mögliche Ablage im Meßbereich des Fächerlots bestimmt, die durch die äußeren Empfangssektoren vorgegeben ist. In einem Überlappungsbereich, in dem sich die Tracks A und B kreuzen, weisen die Lotspuren 41 des Tracks A zahlreiche Schnittpunkte mit den Lotspuren 42 des Tracks B auf. An diesen Bodenpunkten, die in der Fig. 3 durch Kreise um die Schnittpunkte markiert sind, müssen die Tiefenwerte $T_s(i)$ der Tracks A und B identisch sein. Ferner können an den danebenliegenden Schnittpunkten in der Regel keine sprunghaften Änderungen der Tiefenwerte $T_s(i)$ vorhanden sein. Daher lassen sich Abweichungen der Meßergebnisse in einem Regressionsrechenverfahren für eine vorgebbare Reihenfolge der Schnittpunkte ausgleichen und die für die Ermittlung der Tiefenwerte T(i) erforderlichen Parameter so bestimmen, daß die Abweichungen der Tiefenwerte $T_s(i)$ an den Schnittpunkten der verschiedenen Tracks A und B zu einem Minimum werden. Mit den auf diese Weise verbesserten Parametern werden dann auch Tiefenwerte T(i) von Lotspuren außerhalb des Überlappungsbereichs, der Schnittpunkte, korrigiert.

Ein sinnvoller Verlauf einer Meßfahrt mit entsprechenden Lotspuren ist für ein Vermessungsfahrzeug in Fig. 4 dargestellt. Das Vermessungsfahrzeug fährt dabei in Richtung der Pfeile auf mäanderförmige Tracks A bis D mit dazwischen liegenden Übergangsbereichen ohne Lotspuren. Bei diesen Tracks A bis D überlappen sich die Lotspuren teilweise auch mehrfach. Damit ergeben sich verschiedene Möglichkeiten, Schnittpunkte unterschiedlicher Tracks A bis D als Teile des Meßfahrtverlaufs zur Regressionsrechnung heranzuziehen und die Genauigeit der Parameter zur Berechnung der Tiefenwerte T(i) und Ablagewerte A(i) zu erhöhen.

Die Berechnung der Schnittpunkte erfolgt in ortsfesten, terrestischen Koordinaten des Navigationssystems des Vermessungsfahrzeugs, z.B. nach geographischer Länge und Breite. Diese Navigationsdaten sind abhängig von Kurs- und Geschwindigkeitsmessung des Vermessungsfahrzeugs und von seiner Positionsbestimmung, die bei modernen Navigationssystemen durch GPS-Satellitennavigation erfolgt. Doch diese Navigationseinrichtungen weisen ebenfalls Meßfehler auf. So beeinträchtigen Gieren und Stampfen einerseits Kursund Geschwindigkeitsmessung des Fahrzeugs und führen zusammen mit den Fehlern des Satellitennavigators zu Abweichungen bei der Bestimmung der Schnittpunkte in den Überlappungsbereichen der Tracks. Auch hier ist es erforderlich diese Parameter in das Regressionsverfahren mit einzubeziehen, um die Tiefen-T(i) und Ablagewerte A(i) zu optimieren.

Bei der Realisierung des Verfahrens durch Prozessoren des Fächerlots 15 in Verbindung mit der Regressionsrecheneinheit 19 werden gemäß Fig. 5 in einer Vorstufe 100 die Anfangswerte der Parameter, z.B. der Rollwinkel $\alpha_r(i)$ = 3° des Fahrzeugs und die mittlere Schallgeschwindigkeit $c_m$ = 1500m/sec aufgrund der im Meßsystem verfügbaren Navigationsdaten gesetzt. Der nachfolgende Schnittpunktrechner 110 definiert anhand der zu jeder Messung gespeicherten Positionsdaten die Überlappungsbereiche der Tracks und berechnet die Schnittpunkte der Lotspuren. Dabei werden bekannte mathematische Verfahren zur Schnittpunktberechnung benutzt und eine Reihenfolge der Schnittpunkte festgelegt. Diese Reihenfolge in den Überlappungsbereichen ist zwar grundsätzlich beliebig, jedoch ist eine einmal vorgegebene Folge der Schnittpunkte für eine komplette Verfahrensauswertung beizubehalten.

Die Berechnung der Schnittpunkte berücksichtigt einerseits die Position des Fahrzeugs in terrestischen Koordinaten und andererseits die Ablage A(i) des jeweiligen Bodenpunktes gemäß Gleichung 4. Da für eine Lotspur jedoch keine kontinuierlichen Meßergebnisse vorliegen, sind auch keine kontinuierlichen sondern nur diskrete, aufeinanderfolgende Ablagewerte A(i) zu bestimmen. Die Schnittpunkte werden daher regelmäßig nicht mit den diskreten Ablagewerten A(i) der Tracks A und B zusammenfallen, so daß die Koordinatenwerte der Schnittpunkte durch Interpolation aus benachbarten Ablagewerten A(i) berechnet werden müssen. Ebenso werden für jeden Schnittpunkt die Tiefenwerte $T_{SA}(n)$, $T_{SB}(n)$ jedes Tracks A und B aus den Tiefenwerten T(i) der benachbarten Bodenpunkte durch Interpolation berechnet und gespeichert. Zwischen den Tiefenwerten $T_{SA}(n)$, $T_{SB}(n)$ der verschiedenen Tracks A und B werden dann in einem Differenzbildner 120 die Tiefendifferenzen $\Delta T_1(n)$

$$\Delta T_1(n) = T_{1SA}(n) - T_{1SB}(n)$$

an jedem Schnittpunkt ermittelt.

In der nächsten Stufe werden mit einem Manipulationsprozessor 130 für die Folge von Schnittpunkten Änderungen X(m,n) der Tiefendifferenzen $\Delta T_1$ bestimmt. Dazu werden nacheinander die Parameter um einen kleinen Betrag geändert, so der Empfangswinkel $\alpha_k(i)$ um einen Rolloffset $\Delta\alpha_r = 0{,}1°$ oder die mittlere Schallgeschwindigkeit $c_m$ um einen Schallgeschwindigkeitsoffset $\Delta c$, so daß die Gleichungen (3) und (4) unter Berücksichtigung von (2) zu

$$T_S(n) = (c_m + \Delta c) \cdot \frac{t_1}{2} \cdot \cos\left(\arcsin\frac{(c_m + \Delta c) \cdot \sin(\alpha_k(i) + \Delta\alpha_r)}{c_k}\right) \quad (6)$$

und

$$A_S(n) = (c_m + \Delta c) \cdot \frac{t_1}{2} \cdot \sin\left(\arcsin\frac{(c_m + \Delta c) \cdot \sin(\alpha_k(i) + \Delta\alpha_r)}{c_k}\right) \quad (7)$$

weiterentwickelt werden.

Darin wird zunächst der Parameter $\alpha_k(i)$ um den Rolloffset $\Delta\alpha_r = 0{,}1°$ variiert. Mit dem um $\Delta\alpha_r$ veränderten Parameter $\alpha_k(i)$ werden die Tiefenwerte der Tracks und daraus jeweils eine zweite Tiefendifferenz $\Delta T_2(n) = T_{2SA}(n) - T_{2SB}(n)$ an den Schnittpunkten bestimmt. Die Änderung zwischen der ursprüngliche Tiefendifferenz $\Delta T_1$ und der zweiten Tiefendifferenz $\Delta T_2$ ergibt eine erste Tiefendifferenzänderung $X(2,n) = \Delta T_1 - \Delta T_2$. Die Änderung des ersten Parameters $\alpha_k(i)$ um den Rolloffset $\Delta\alpha_r$ wird in einer Rücksetzoperation 131 wieder rückgängig gemacht und in dem Entscheidungsoperator 140 ermittelt, ob weitere Parameter vorhanden sind, deren Wert zur Berechnung einer Tiefendifferenzänderung X(m,n) noch nicht beigetragen hat. In dem hier beschriebenen Beispiel ist der nächste Parameter $c_m$. Der Parameter $c_m$ wird dabei um den Schallgeschwindigkeitsoffset $\Delta c = 1$ m/s verändert und die Tiefenwerte $T_{3SA}(n)$ und $T_{3SB}(n)$ sowie die Tiefendifferenz $\Delta T_3(n)$ aufgrund dieser Parameteränderung berechnet und die nächste Tiefendifferenzänderung $X(3,n) = \Delta T_1 - \Delta T_3$ bezogen auf die erste Tiefendifferenz $\Delta T_1$ bestimmt. Nach dem Rücksetzen dieses Parameters $c_m$ wird vom Entscheidungsoperator 140 das Durchlaufen dieser Schleife so oft initiiert, wie veränderbare Parameter für die Verbesserung der Meßergebnisse berücksichtigt werden müssen. Am Ende dieses Berechnungsschrittes stehen eine der Anzahl der Parameter entsprechenden Zahl von Wertefolgen mit Tiefendifferenzänderungen X(m,n) für jeden Schnittpunkt zur Verfügung.

Diese Wertefolgen der Tiefendifferenzänderungen X(m,n) bilden für jeden Schnittpunkt die dem Regressionsrechner 150 zuzuführende Wertematrix eines Gleichungssystems

$$Y(n) = k_1 \cdot X(1,n) + k_2 \cdot X(2,n) + k_3 \cdot X(3,n) + \dots k_m \cdot X(m,n) \qquad (8)$$

mit der Anzahl der Parameter m = 1, 2 ... M und der Anzahl der Schnittpunkte n = 1, 2 ... N, wobei Y(n) gleich der

Tiefendifferenz $\Delta T_1(n)$ zu setzen ist und $k_1 \cdot X(1,n)$ eine Konstante ist. Für dieses Gleichungssystem sind die Koeffizienten $k_m$ so zu berechnen, daß die Tiefenwerte $T_s(n)$ zwischen den Tracks einen minimalen Fehler aufweisen und die Tiefendifferenzen $\Delta T_m(n)$ minimiert, besser optimiert, werden. Mit den in der Regression ermittelten Koeffizienten $k_m$ werden die betreffenden Parameter korrigiert und die Anfangsdaten neu berechnet, d.h. als geänderter Rolloffset ist $k_2 \cdot \Delta \alpha_r$ zu berücksichtigen und die mittlere Schallgeschwindigkeit $c_m$ ist um $k_3 \cdot \Delta c$ zu korrigieren. Wenn dann die korrigierten Anfangsdaten vorher festgelegten Fehlerkriterien genügen, werden sie für die Datenausgabe 170 freigegeben. Andernfalls verzweigt das Berechnungsverfahren erneut zum Schnittpunktrechner 110 und die in der Fig. 5 dargestellten Funktionen werden ein zweites Mal durchgeführt.

Das im Regressionsrechner benutzte Berechnungsverfahren der mehrfachen Linearregression ist aus der Literatur bekannt und beispielsweise aus Müller/Kick, Basic-Programme für die angewandte Statistik, 1985, R. Oldenburg Verlag, S. 77 ff, zu entnehmen.

In der Fig. 3 sind Lotspuren 43, 44 oder Teile der Lotspuren 41 und 42 vermessen worden, die sich nicht überlappen und deshalb miteinander keine Schnittpunkte bilden. Auch die Tiefenwerte $T(i)$ dieser Lotspuren 43, 44 werden mit den aufgrund der Regression korrigierten Parametern neu berechnet, da die Beeinflussung der Parameter in gleicher Weise auch außerhalb des Überlappungsbereichs vorausgesetzt wird.

Ohne eine weitere zeichnerische Darstellung kann in einer verbesserten Ausführungsform des erfindungsgemäßen Verfahrens die jeweilige Position des Vermessungsfahrzeugs mit GPS (Global-Positioning-System)-Satellitennavigation bestimmt, jedoch durch zusätzlichen Vergleich mit anderen Navigationsverfahren, wie Koppelnavigation und elektronische Seekarte (ECDIS) oder auch Radarmessung gestützt werden. Dabei sind insbesondere die Fahrzeugbewegung durch Rollen, Stampfen und Gieren, die wesentlichen Einfluß auf Kurs und Geschwindigkeit haben, zu messen und bei diesen Navigationsverfahren zu berücksichtigen. Die in diesem Zusammenhang anfallenden Datenmengen an Navigationsdaten zur Positionsbestimmung und Meßergebnissen zur Berechnung der Tiefen- und Ablagewerte erreichen in der Regel einen sehr großen Umfang. Daher werden alle benötigten Daten in einem Massenspeicher aufgezeichnet und erst nach beendung der Meßfahrt ausgewertet, so daß die Verarbeitung großer Datenmengen in Echtzeit, parallel zur Meßwerterfassung, nicht mehr erforderlich ist.

**Patentansprüche**

1. Verfahren zum Bestimmen von Tiefenwerten eines Gewässers mit einem Fächerlot, das aufgrund jedes ausgelösten Sendeimpulses für eine Vielzahl vorgegebener Empfangsrichtungen vom Gewässerboden gestreute bzw. reflektierte Lotimpulse empfängt, deren Laufzeit mißt und aus Laufzeit, Empfangsrichtung, Parametern der Schallausbreitung und Fahrzeugbewegung den jeweiligen Tiefenwert und Ablagewert ermittelt, und mit einem Regressionsrechner zum Bestimmen von Koeffizienten nach der bekannten Methode der mehrfachen linearen Regression, **dadurch gekennzeichnet, daß** ein Meßgebiet von einem Vermessungsfahrzeug (10) mindestens zweimal auf verschiedenen Tracks (A, B) derart befahren wird, daß sich Fächerlotspuren (41, 42) des Fächerlots (15) in einem Überlappungsbereich überschneiden, daß an jedem Schnittpunkt im Überlappungsbereich der Fächerlotspuren (41, 42) zweier Tracks (A, B) jeweils eine erste Tiefendifferenz $\Delta T_1$ zwischen den mit den Anfangswerten der Parameter $(c_m, \alpha_r)$ bestimmten Tiefenwerten $T_s(i)$ der Tracks (A, B) ermittelt wird, daß für jeden Schnittpunkt weitere Tiefendifferenzen $\Delta T_m$ - entsprechend der Zahl m der veränderbaren Parameter $(c_m, \alpha_r)$ - berechnet werden, indem nacheinander jeweils ein Parameter $(c_m, \alpha_r)$ um einen geringen Betrag $(\Delta c, \Delta \alpha_r)$ geändert wird, wobei der geänderte Parameter $(c_m, \alpha_r)$ vor Änderung des nächsten Parameters $(c_m, \alpha_r)$ auf seinen Anfangswert zurückgesetzt wird, daß durch die mehrfache lineare Regression Koeffizienten k zur Korrektur der Parameter $(c_m, \alpha_r)$ derart bestimmt werden, daß für jeden Schnittpunkt durch die Summe von mit den Koeffizienten gewichteten Tiefendifferenzänderungen $X(m,n)$ zwischen der ersten Tiefendifferenz $\Delta T_1$ und jeder weiteren Tiefendifferenz $\Delta T_m$ die erste Tiefendifferenz $\Delta T_1$ optimal angenähert wird, und daß die Anfangswerte der Parameter $(c_m, \alpha_r)$ mit den Koeffizienten k korrigiert und die Tiefenwerte $T(i)$ neu berechnet werden.

2. Verfahren nach Anspruch 1, **dadurch gekennzeichnet, daß** mit den durch die Regression berechneten Koeffizienten k die veränderbaren Parameter $(c_m, \alpha_r)$ mittlere Schallgeschwindigkeit $(c_m)$, Geschwindigkeit des Fahrzeugs, Rollwinkel $(\alpha_r)$ und/oder Stampfwinkel korrigiert werden.

3. Verfahren nach einem der Ansprüche 1 oder 2, **dadurch gekennzeichnet, daß** die Tracks (A, B) im wesentlichen gegenläufig sind.

4. Verfahren nach einem der Ansprüche 1 oder 2, **dadurch gekennzeichnet, daß** die Tracks (A, B) des Vermessungsfahrzeugs (10) mäanderförmig angelegt sind.

**5.** Verfahren nach einem der Ansprüche 1 bis 4, **dadurch gekennzeichnet, daß** die Schnittpunkte der Lotspuren (41, 42) bezogen auf Positionen des Fahrzeugs (10) bestimmt werden.

**6.** Verfahren nach einem der Ansprüche 1 bis 5, **dadurch gekennzeichnet, daß** die Position des Fahrzeugs (10) mit einem GPS-Satellitennavigationssystem vermessen wird.

**7.** Verfahren nach einem der Ansprüche 1 bis 6, **dadurch gekennzeichnet, daß** die Position des Vermessungsfahrzeug (10) während der Tracks (A, B) durch Koppelnavigation bestimmt und durch GPS und ECDIS gestützt wird.

**8.** Verfahren nach einem der Ansprüche 1 bis 7, **dadurch gekennzeichnet, daß** zur Kompensation der Fahrzeugbewegung Rollwinkel ($\alpha_r$), Stampf- und Gierwinkel gemessen und bei der Berechnung von Tiefenwerten T(i) und Ablagewerten A(i) berücksichtigt werden.

**9.** Verfahren nach einem der Ansprüche 1 bis 8, **dadurch gekennzeichnet, daß** die Tiefenwerte T(i) für Bodenpunkte außerhalb der Überlappungsbereiche mit den korrigierten Parametern ($c_m$, $\alpha_r$) bestimmt werden.

**10.** Verfahren nach einem der Ansprüche 1 bis 9, **dadurch gekennzeichnet, daß** die Meßdaten aufgezeichnet oder gespeichert und die Tiefenwerte T(i) nach Beendung der Meßfahrt offline bestimmt werden.

**11.** Verfahren nach einem der Ansprüche 1 bis 10, **dadurch gekennzeichnet, daß** der Tiefenwert des Schnittpunktes $T_s(i)$ durch Interpolation der Tiefenwerte benachbarter Bodenpunkte T(i) bestimmt wird.

**12.** Verfahren nach einem der Ansprüche 1 bis 11, **dadurch gekennzeichnet, daß** das Verfahren mindestens zweimal durchlaufen wird, wenn die korrigierten Parameter ($c_m$, $\alpha_r$) festgelegten Fehlerkriterien nicht genügen.

**Claims**

**1.** Method for determination of depth values for a waterway by means of an echo sounder with a fan-shaped beam which, on the basis of each transmission pulse which is initiated, receives echo-sounding pulses which are scattered or reflected from the bottom of the waterway for a large number of predetermined reception directions, measures the delay time of these echo-sounding pulses and uses the delay time, the reception direction, parameters relating to sound propagation and vehicle or vessel movement to determine the respective depth value and offset value, and having a regression computer for determination of coefficients on the basis of the known method of multiple linear regression, **characterized in that** a survey vehicle or vessel (10) moves at least twice over a measurement region on different tracks (A, B) such that traces (41, 42) of the echo sounder with a fan-shaped beam (15) intersect in an overlapping area, such that a first depth difference $\Delta T_1$ between the depth values $T_s(i)$ of the tracks (A, B) which are determined using the initial values of the parameters ($c_m$, $\alpha_r$) are in each case determined at each intersection in the overlapping area of the traces (41, 42) from the echo sounder with the fan shaped beam from two tracks (A, B), such that further depth differences $\Delta T_m$ - corresponding to the number m of variable parameters ($c_m$, $\alpha_r$) - are calculated for each intersection, **in that** one parameter ($c_m$, $\alpha_r$) is in each case varied by a small amount ($\Delta c$, $\Delta\alpha$), with the varied parameter ($c_m$, $\alpha_r$) being reset to its initial value before any change to the next parameter ($c_m$, $\alpha_r$) **in that** coefficients k for correction of the parameters ($c_m$, $\alpha_r$) are determined by multiple linear regression such that the first depth difference $\Delta T_1$ is approached in an optimum manner for each intersection by the sum of depth difference changes X(m, n) (which are weighted by the coefficients) between the first depth difference $\Delta T_1$ and each further depth difference $\Delta T_m$, and **in that** the initial values of the parameters ($c_m$, $\alpha_r$) are corrected using the coefficients k, and the depth values T(i) are recalculated.

**2.** Method according to Claim 1, **characterized in that** the variable parameters ($c_m$, $\alpha_r$) for the mean speed of sound ($C_m$), speed of the vehicle or vessel, the roll angle ($\alpha_r$) and/or the pitch angle are corrected by means of the coefficients k which have been calculated by the regression analysis.

**3.** Method according to one of Claims 1 or 2,
**characterized in that** the tracks (A, B) are essentially in opposite directions.

**4.** Method according to one of Claims 1 or 2,
**characterized in that** the tracks (A, B) of the survey vehicle or vessel (10) have a meandering shape.

**5.** Method according to one of Claims 1 to 4,
**characterized in that** the intersections of the echo-sounder traces (41, 42) are determined with respect to positions of the vehicle or vessel (10).

**6.** Method according to one of Claims 1 to 5,
**characterized in that** the position of the vehicle or vessel (10) is measured by means of a GPS satellite navigation system.

**7.** Method according to one of Claims 1 to 6,
**characterized in that** the position of the survey vehicle or vessel (10) is determined by integrated navigation during the tracks (A, B), and is supported by GPS and ECDIS.

**8.** Method according to one of Claims 1 to 7,
**characterized in that** the roll angle ($\alpha_r$), the pitch angle and the yaw angle are measured in order to compensate for the vehicle or vessel movement, and are taken into account in the calculation of depth values T(i) and offset values A(i).

**9.** Method according to one of Claims 1 to 8,
**characterized in that** the depth values T(i) are determined for bottom points away from the overlapping edges by means of corrected parameters ($c_m$, $\alpha_r$).

**10.** Method according to one of Claims 1 to 9,
**characterized in that** the measurement data is recorded or stored, and the depth values T(i) are determined off-line after completion of the measurement run.

**11.** Method according to one of Claims 1 to 10,
**characterized in that** the depth value of the intersection $T_s(i)$ is determined by interpolation of the depth values of adjacent bottom points T(i).

**12.** Method according to one of Claims 1 to 11,
**characterized in that** the method is carried out at least twice if the corrected parameters ($c_m$, $\alpha_r$) do not satisfy defined correct criteria.

**Revendications**

**1.** Procédé de détermination des valeurs de profondeur d'un cours d'eau avec une sonde en éventail qui, sur la base de chaque impulsion émise déclenchée, reçoit pour une pluralité de dispositifs de réception prédéfinis les impulsions de sondage rayonnées ou réfléchies par le fond de l'eau, mesure leur temps de propagation et détermine la valeur correspondante de la profondeur et la valeur de la sédimentation à partir du temps de propagation, du sens de réception, des paramètres de propagation du son et du mouvement du navire, et avec un calculateur de régression destiné à déterminer les coefficients d'après la méthode connue de la régression linéaire multiple, **caractérisé en ce qu'**un domaine de mesure est parcouru au moins deux fois par un navire de mesure (10) sur des trajets différents (A, B) de manière à ce que les traces de sonde en éventail (41, 42) de la sonde en éventail (15) s'entrecoupent dans une zone de chevauchement, qu'en chaque point d'intersection dans la zone de chevauchement des traces de la sonde en éventail (41, 42) de deux trajets (A, B) est à chaque fois déterminée une première différence de profondeur $\Delta T_1$ entre les valeurs de la profondeur Ts (i) des trajets (A, B) déterminées avec les valeurs initiales des paramètres ($c_m$, $\alpha_r$), que des différences de profondeur $\Delta T_m$ supplémentaires sont calculées pour chaque point d'intersection en fonction du nombre m de paramètres ($c_m$, $\alpha_r$) modifiables en modifiant successivement à chaque fois un paramètre ($c_m$, $\alpha_r$) d'une petite valeur ($\Delta c_m$, $\Delta\alpha_r$), le paramètre ($c_m$, $\alpha_r$) modifié étant ramené à sa valeur initiale avant de modifier le paramètre ($c_m$, $\alpha_r$) suivant, que des coefficients k de correction des paramètres ($c_m$, $\alpha_r$) sont déterminés à partir de la régression linéaire multiple de manière à ce que pour chaque point d'intersection la première différence de profondeur $\Delta T_1$ est approchée de manière optimale par la somme des variations de différence de profondeur pondérées avec les coefficients X(m, n) entre la première différence de profondeur $\Delta T_1$ et chaque différence de profondeur supplémentaire $\Delta T_m$, et que les valeurs initiales des paramètres ($c_m$, $\alpha_r$) sont corrigées avec les coefficients k et les valeurs de la profondeur T(i) sont recalculées.

**2.** Procédé selon la revendication 1, **caractérisé en ce que** les paramètres modifiables ($c_m$, $\alpha_r$) vitesse moyenne du

son ($c_m$), vitesse du navire, angle de roulis ($\alpha_r$) et/ou angle de tangage sont corrigés avec les coefficients k calculés à l'aide de la régression.

3. Procédé selon l'une des revendications 1 ou 2, **caractérisé en ce que** les trajets (A, B) sont pour l'essentiel en sens inverse.

4. Procédé selon l'une des revendications 1 ou 2, **caractérisé en ce que** les trajets (A, B) du navire de mesure (10) sont établis en forme de méandres.

5. Procédé selon l'une des revendications 1 à 4, **caractérisé en ce que** les points d'intersection des traces de la sonde (41, 42) sont déterminés par rapport aux positions du navire (10).

6. Procédé selon l'une des revendications 1 à 5, **caractérisé en ce que** la position du navire (10) est mesurée avec un système de navigation par satellite GPS.

7. Procédé selon l'une des revendications 1 à 6, **caractérisé en ce que** la position du navire de mesure (10) est déterminée pendant la trajet (A, B) par une navigation à l'estime ainsi que par GPS et ECDIS.

8. Procédé selon l'une des revendications 1 à 7, **caractérisé en ce que** l'angle de roulis ($\alpha_r$), l'angle de tangage et l'angle de lacet sont mesurés pour compenser le mouvement du navire et sont pris en compte lors du calcul des valeurs de la profondeur T(i) et des valeurs de la sédimentation A(i).

9. Procédé selon l'une des revendications 1 à 8, **caractérisé en ce que** les valeurs de la profondeur T(i) sont déterminées avec les paramètres ($c_m$, $\alpha_r$) corrigés pour des points du fond à l'extérieur des zones de chevauchement.

10. Procédé selon l'une des revendications 1 à 9, **caractérisé en ce que** les données de mesure sont enregistrées ou mémorisées et les valeurs de la profondeur T(i) sont déterminées hors ligne après la fin de la course de mesure.

11. Procédé selon l'une des revendications 1 à 10, **caractérisé en ce que** la valeur de la profondeur du point d'intersection Ts(i) est déterminée par interpolation des valeurs de la profondeur de points du fond T(i) voisins.

12. Procédé selon l'une des revendications 1 à 11, **caractérisé en ce que** le procédé est exécuté au moins deux fois lorsque les paramètres corrigés ($c_m$, $\alpha_r$) ne répondent pas aux critères d'erreur fixés.

Fig. 1

Fig. 2

Fig. 4

Fig. 3

Fig. 5